# EUROPEAN PATENT SPECIFICATION

(11) **EP 3 061 658 B1**
(45) Date of publication and mention of the grant of the patent: **27.12.2017**
(21) Application number: 16156704.5
(22) Date of filing: 22.02.2016
(51) Int. Cl.: B60R 25/24, G07C 9/00, E05F 15/73, E05F 15/76

(54) **DOOR OPENING-CLOSING CONTROL APPARATUS OF VEHICLE**
TÜRÖFFNUNGSSCHLIESSSTEUERUNGSVORRICHTUNG EINES FAHRZEUGS
APPAREIL DE COMMANDE D'OUVERTURE-FERMETURE DE PORTE DE VÉHICULE

(30) Priority: 27.02.2015 JP 2015037896; 27.02.2015 JP 2015037897
(43) Date of publication of application: 31.08.2016
(73) Proprietor: Honda Access Corporation, Niiza-shi, Saitama 352-8589 (JP)
(72) Inventor: SAKAI, Hiroto, Saitama, 352-8589 (JP)
(74) Representative: Weickmann & Weickmann PartmbB

(56) References cited:
- EP-A1- 1 808 820
- EP-A2- 0 908 589
- WO-A1-03/107298
- GB-A- 2 426 102
- JP-A- 2007 023 620
- JP-A- 2008 088 720

## Description

### BACKGROUND OF THE INVENTION

### FIELD OF THE INVENTION

The present invention relates to a door opening-closing control apparatus of a vehicle in which when authentication is established by intercommunication between a portable device carried by a driver and a door opening-closing control unit provided in the vehicle, door opening operation and door closing operation of a door of the vehicle by the portable device are allowed.

### DESCRIPTION OF THE RELATED ART

Japanese Patent Application Laid-open No. 2007-23620 has made known a door opening-closing control apparatus in which intercommunication is performed between a portable device carried by a driver and a door opening-closing control unit provided in a vehicle, wherein when the driver having locked a sliding door and left the vehicle returns to the vehicle to approach the sliding door and authentication is established by the intercommunication between the portable device and the door opening-closing control unit, a door lock of the sliding door is automatically released, and a door opening-closing actuator is activated by touching of a door handle by the driver to automatically open the sliding door.

In the door opening-closing control apparatus, even in a situation where the driver returns to the vehicle while holding a large amount of goods and has difficulty in opening the sliding door by operating an automatic door opening button of the portable device, the driver can open the sliding door only by touching the door handle while holding the goods, and convenience is improved.

The conventional door opening-closing control apparatus described above includes a cancel switch of an automatic door opening control near a driver seat, and it is possible to be set such that, in a case where the driver leaves the vehicle with the cancel switch set to ON, no automatic door opening control is performed when the driver returns to the vehicle. Accordingly, the automatic door opening control cannot be reserved again in such cases where the driver who has no plan of shopping leaves the vehicle with the cancel switch set to ON and then unexpectedly buys so large amount of goods that both hands are occupied. The driver having returned to the vehicle thus needs to open the sliding door by putting the goods on the ground and then operating an automatic door opening button of the portable device. Hence, there is a problem of impairing the convenience.

Moreover, as described above, in the conventional door opening-closing control apparatus, execution and non-execution of the automatic door opening control can be arbitrarily selected according to an intention of the driver. However, in both cases of execution and non-execution of the automatic door opening control, the door opening-closing control unit provided in the vehicle continues transmitting a request signal at predetermined time intervals to detect the portable device while the driver is away from the vehicle. Accordingly, there is a problem that dark current consumed by the door opening-closing control apparatus increases and a battery of the vehicle is wastefully consumed.

### SUMMARY OF THE INVENTION

The present invention has been made in view of the circumstances described above, and an object of the present invention is to reduce dark current in a door opening-closing control apparatus of a vehicle in which execution and non-execution of automatic opening-closing control of a door can be selected, the dark current being consumed by a door opening-closing control unit in order to transmit a request signal.

According to claim 1, in the door opening-closing control apparatus of a vehicle, when the authentication is established by the intercommunication using the request signal and the response signal, the door opening operation and the door closing operation of the door of the vehicle performed with the portable device carried by the driver are allowed, the request signal being transmitted at the predetermined time interval by a door opening-closing control unit provided in the vehicle, and the response signal being transmitted by the portable device in response to the request signal.

The door opening-closing control unit includes the reservation setting means which stores an automatic door opening command for automatically opening the door. In the state where the automatic door opening command is stored in the reservation setting means, the door opening-closing control unit automatically opens the door when the portable device is moved close to the door and the authentication is established between the door opening-closing control unit and the portable device. Accordingly, for example, in a case where the driver needs to return to the vehicle while holding a large amount of goods, the driver reserves the automatic door opening command in the door opening-closing control unit in advance so as to be able to automatically open the door when returning to the vehicle, and convenience is thereby improved.

Moreover, in the state where the automatic door opening command is not stored in the reservation setting means, the door opening-closing control unit does not transmit the request signal or sets the transmission time interval of the request signal longer than the predetermined time interval. Accordingly, it possible to prevent a battery of the vehicle from being wastefully consumed by reducing dark current consumed by the door opening-closing control unit. In this case, if the driver needs to open the door when returning to the vehicle, the door can be opened with the portable device without relying on the request signal, so there is no problem.

According to claim 2 of the present invention, there is provided a door opening-closing control apparatus of a vehicle in which when authentication is established by intercommunication using a request signal and a response signal, door opening operation and door closing operation of a door of the vehicle by a portable device carried by a driver are allowed, the request signal being transmitted at a predetermined time interval by a door opening-closing control unit provided in the vehicle, and the response signal being transmitted by the portable device in response to the request signal, wherein the door opening-closing control unit includes reservation setting means which stores an automatic door closing command for automatically closing the door, in a state where the automatic door closing command is stored in the reservation setting means, the door opening-closing control unit automatically closes the door when the portable device is moved away from the door and the intercommunication between the door opening-closing control unit and the portable device stops, and in a state where the automatic door closing command is not stored in the reservation setting means, the door opening-closing control unit does not transmit the request signal or sets a transmission time interval of the request signal longer than the predetermined time interval.

According to claim 2, in the door opening-closing control apparatus of a vehicle, when the authentication is established by the intercommunication using the request signal and the response signal, the door opening operation and the door closing operation of the door of the vehicle performed with the portable device carried by the driver are allowed, the request signal being transmitted at the predetermined time interval by the door opening-closing control unit provided in the vehicle, and the response signal being transmitted by the portable device in response to the request signal.

The door opening-closing control unit includes the reservation setting means which stores the automatic door closing command for automatically closing the door. In the state where the automatic door closing command is stored in the reservation setting means, the door opening-closing control unit automatically closes the door when the portable device is moved away from the door and the intercommunication between the door opening-closing control unit and the portable device stops. Accordingly, for example, in a case where the driver needs to leave the vehicle while holding a large amount of goods, the driver reserves the automatic door closing command in the door opening-closing control unit in advance so as to be able to automatically close the door after holding the goods, and convenience is thereby improved.

Moreover, in the state where the automatic door closing command is not stored in the reservation setting means, the door opening-closing control unit does not transmit the request signal or sets the transmission time interval of the request signal longer than the predetermined time interval. Accordingly, it possible to prevent the battery of the vehicle from being wastefully consumed by reducing the dark current consumed by the door opening-closing control unit. In this case, if the driver needs to open the door when returning to the vehicle, the door can be opened with the portable device without relying on the request signal, so there is no problem.

According to claim 3 of the present invention, the portable device includes a door opening button used to transmit a door opening command for opening the door and a door closing button used to transmit a door closing command for closing the door, the automatic door opening command is stored by performing predetermined operation on the door opening button, and the automatic door closing command is stored by performing predetermined operation on the door closing button.

According to claim 3, reservation setting can be performed by utilizing the existing door opening button and door closing button, without adding special buttons and switches.

According to claim 4 of the present invention, the portable device includes a slide switch, and the automatic door opening command or the automatic door closing command is stored by operating the slide switch.

According to claim 4, a state where the reservation setting is performed and a state where the reservation setting is not performed can be checked only by visually observing the slide switch.

According to claim 5 of the present invention, the portable device includes a door opening button used to transmit a door opening command for opening the door and a door closing button used to transmit a door closing command for closing the door, the automatic door opening command is stored by operating the door opening button with the slide switch set at an ON position, and the automatic door closing command is stored by operating the door closing button with the slide switch set at the ON position.

According to claim 5, only one of the automatic door opening command and the automatic door closing command can be reserved.

According to claim 6 of the present invention, the slide switch is switchable among an OFF position, an automatic door opening position, and an automatic door closing position.

According to claim 6, switching among three states can be performed by using one slide switch and operability is improved. Moreover, the state where the reservation setting is performed and the state where the reservation setting is not performed can be checked only by visually observing the slide switch.

According to claim 7 of the present invention, the door is any of a sliding door, a tailgate, and a trunk lid.

According to claim 7, accordingly, it is possible to automatically open and close the door through which a large amount of goods are loaded and unloaded and further improve the convenience.

Note that a left sliding door 12L, a right sliding door 12R and a tailgate 13 of embodiments correspond to a door of the present invention, an electronic key 31 of the embodiments corresponds to the portable device of the present invention, a lock button 32 of the embodiments corresponds to the door closing button of the present invention, an unlock button 33 of the embodiments corresponds to the door opening button of the present invention, and an electronic key ECU 37 of the embodiments corresponds to the reservation setting means of the present invention.

The above and other objects, characteristics and advantages of the present invention will be clear from detailed descriptions of the preferred embodiments which will be provided below while referring to the attached drawings.

### BRIEF DESCRIPTION OF THE DRAWINGS

FIG. 1 is a view showing an entire configuration of a door opening-closing control apparatus according to one example, not part of the invention.
FIG. 2 is a view showing a configuration of an electronic key.
FIG. 3 is a flowchart explaining automatic door opening control of a door according to a first example.
FIG. 4 is a flowchart explaining automatic door closing control of the door according to the first example.
FIG. 5 is a flowchart explaining automatic door opening control of a door according to a second embodiment.
FIG. 6 is a flowchart explaining automatic door closing control of the door according to the second embodiment.
FIG. 7 is a view showing a configuration of an electronic key according to a third embodiment.
FIG. 8 is a view showing a configuration of an electronic key according to a fourth embodiment.

### DESCRIPTION OF THE PREFERRED EMBODIMENTS

### [First Example]

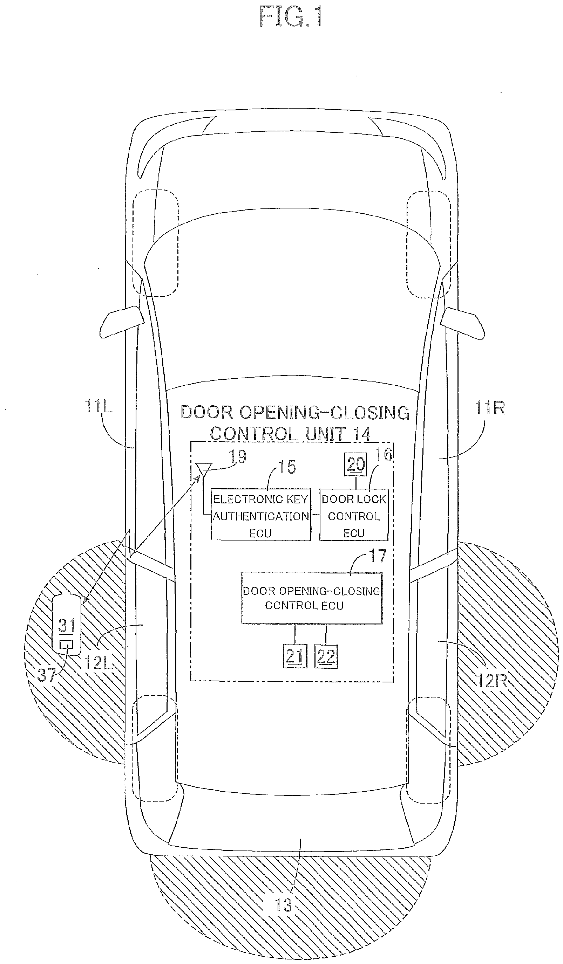

A first example which is not part of the present invention is described below based on FIGS. 1 to 4.

As illustrated in FIG. 1, a five-door vehicle of the embodiment includes a left front door 11L, a right front door 11R, a left sliding door 12L, a right sliding door 12R, and a tailgate 13. The left sliding door 12L, the right sliding door 12R, and the tailgate 13 form the door of the present invention and are capable of being automatically locked and unlocked by an actuator, respectively, and being automatically opened and closed by an actuator, respectively. Hereafter, the term "doors" alone refers to the left sliding door 12L, the right sliding door 12R, and the tailgate 13.

A door opening-closing control unit 14 includes an electronic key authentication ECU 15, a door lock control ECU 16, and a door opening-closing control ECU 17 which are connected to one another by a data bus 18, the door opening-closing control unit 14 being mounted on the vehicle so as to control locking and unlocking of the left front door 11L, the right front door 11R, the left sliding door 12L, the right sliding door 12R and the tailgate 13 by a door lock actuator 20 such as a solenoid, and so as to control opening and closing of the left sliding door 12L, the right sliding door 12R, and the tailgate 13 by a door opening-closing actuator 21 such as an electric motor.

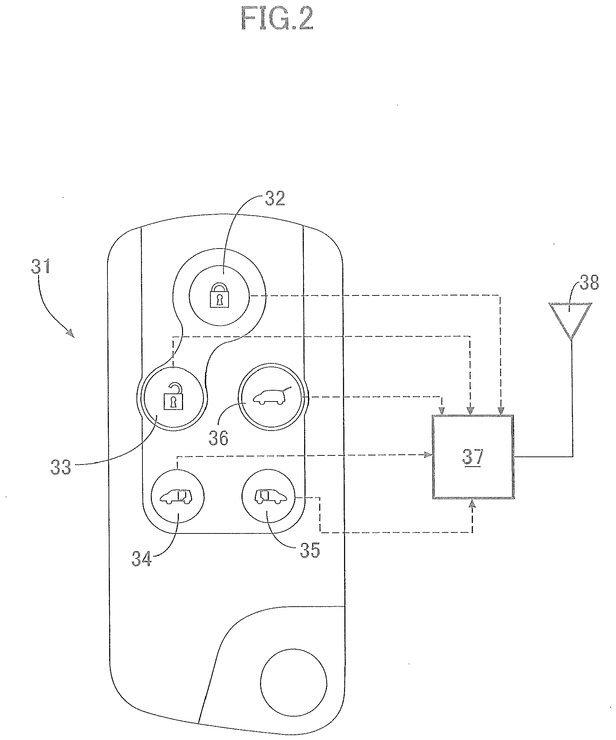

Antennas 19 for intercommunication with an electronic key 31 (see FIG. 2) to be described later are connected to the electronic key authentication ECU 15. The door lock actuator 20 for locking and unlocking the left front door 11L, the right front door 11R, the left sliding door 12L, the right sliding door 12R, and the tailgate 13 is connected to the door lock control ECU 16. The door opening-closing actuator 21 for automatically opening and closing the doors (the left sliding door 12L, the right sliding door 12R, and the tailgate 13) and a buzzer 22 for notifying a driver that reservation setting of an automatic door opening command and an automatic door closing command are performed are connected to the door opening-closing control ECU 17.

The antennas 19 are provided respectively for the left sliding door 12L, the right sliding door 12R, and the tailgate 13, and a communicable range of each of the antennas 19 is about 1 m (see areas shaded by diagonal lines in FIG. 1). The electronic key 31 can communicate with each of the antennas 19, and the electronic key authentication ECU 15 can recognize in which one of the communicable ranges of the left sliding door 12L, the right sliding door 12R, and the tailgate 13 the electronic key 31 exists.

As illustrated in FIG. 2, the electronic key 31 is provided with a lock button 32, an unlock button 33, a left sliding door opening-closing button 34, a right sliding door opening-closing button 35, and a tailgate opening-closing button 36. The electronic key 31 includes an electronic key ECU 37. The lock button 32, the unlock button 33, the left sliding door opening-closing button 34, the right sliding door opening-closing button 35, and the tailgate opening-closing button 36 are connected to the electronic key ECU 37. Moreover, an antenna 38 for performing intercommunication with the electronic key authentication ECU 15 of the door opening-closing control unit 14 is connected to the electronic key ECU 37.

Next, description is given of an operation of locking and unlocking the left front door 11L, the right front door 11R, the left sliding door 12L, the right sliding door 12R, and the tailgate 13 by the electronic key 31.

The electronic key authentication ECU 15 of the door opening-closing control unit 14 transmits a request signal from the antennas 19 of the doors 12L, 12R, 13 at predetermined time intervals. When the driver with the electronic key 31 exists inside one of the communicable ranges around the doors 12L, 12R, 13 (for example, ranges within a distance of about 1.0 m from the doors 12L, 12R, 13), a reception level of the request signal received by the antenna 38 of the electronic key 31 exceeds a threshold, and the intercommunication between the electronic key authentication ECU 15 and the electronic key ECU 37 becomes possible. When the intercommunication between the electronic key authentication ECU 15 and the electronic key ECU 37 becomes possible, the electronic key ECU 37 transmits a response signal including an ID code to the electronic key authentication ECU 15, and the electronic key authentication ECU 15 checks the ID code included in the response signal against an ID code stored in advance. When the two ID codes match, the electronic key authentication ECU 15 authenticates the electronic key 31 as the key of an own vehicle.

When the driver presses the lock button 32 of the electronic key 31 in the state where the authentication is established between the electronic key 31 and the door opening-closing control unit 14 as described above, the door lock control ECU 16 drives the door lock actuator 20 to lock all of the left front door 11L, the right front door 11R, the left sliding door 12L, the right sliding door 12R, and the tailgate 13. Meanwhile, when the driver presses the unlock button 33 of the electronic key 31, the doors 11L, 11R, 12L, 12R, 13 are all unlocked.

For example, when the driver presses the left sliding door opening-closing button 34 of the electronic key 31 inside the communicable region around the left sliding door 12L in a situation where the left sliding door 12L is closed, the door lock control ECU 16 activates the door lock actuator 20 to release a door lock and the door opening-closing control ECU 17 activates the door opening-closing actuator 21 to automatically open the left sliding door 12L. Meanwhile, when the driver presses the left sliding door opening-closing button 34 of the electronic key 31 inside the communicable region around the left sliding door 12L in a situation where the left sliding door 12L is open, the door opening-closing control ECU 17 activates the door opening-closing actuator 21 to automatically close the left sliding door 12L and the door lock control ECU 16 activates the door lock actuator 20 to operate the door lock.

Similarly, when the driver presses the right sliding door opening-closing button 35 of the electronic key 31 inside the communicable range around the right sliding door 12R, the right sliding door 12R can be automatically closed or opened. Moreover, when the driver presses the tailgate opening-closing button 36 of the electronic key 31 inside the communicable range around the tailgate 13, the tailgate 13 can be automatically closed or opened.

Next, description is given of automatic door opening control of the left sliding door 12L, the right sliding door 12R, and the tailgate 13 by reservation in the first example. In the case where the driver having left the vehicle for shopping buys an unexpectedly large amount of goods and returns to the vehicle with both hands occupied by the goods, the driver cannot operate the electronic key 31 to open the left sliding door 12L, the right sliding door 12R, or the tailgate 13 in order to load the goods onto the vehicle, unless the driver puts the goods on the ground. In the embodiment, by storing an automatic door opening command in the electronic key 31 in advance before the driver holds the goods in both hands, one of the doors 12L, 12R, 13 is automatically opened when the driver returns to the vehicle. Accordingly, there is no need to put goods on the ground and operate the electronic key 31, and the convenience is improved.

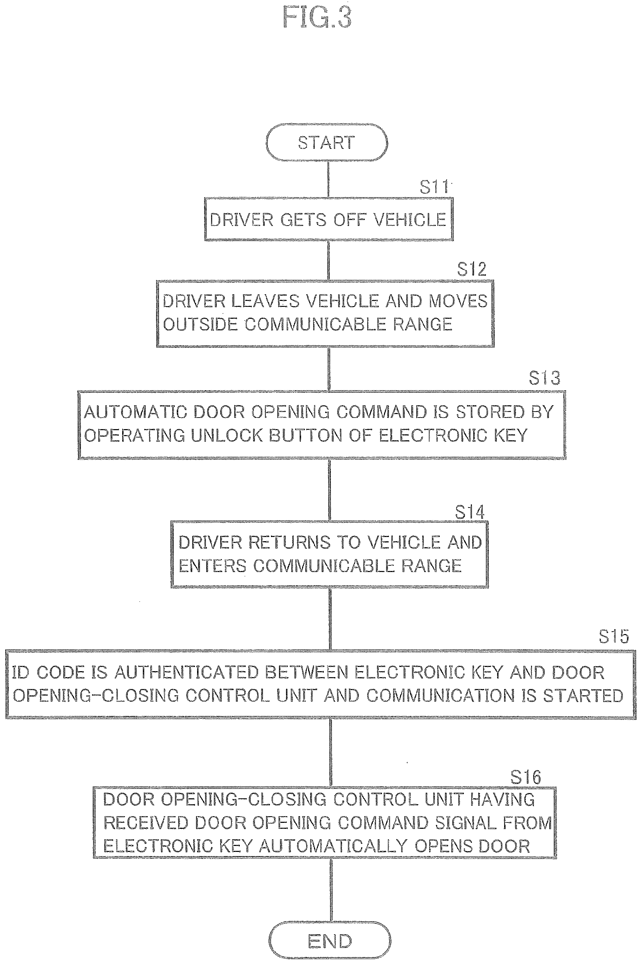

Specifically, in step S11 of a flowchart of FIG. 3, when the driver gets off the vehicle and presses the lock button 32 of the electronic key 31, the left front door 11L, the right front door 11R, the left sliding door 12L, the right sliding door 12R, and the tailgate 13 are thereby all locked. In step S12, the driver leaves the vehicle and moves outside a communicable range of the electronic key ECU 37 of the electronic key 31 and the electronic key authentication ECU 15 of the door opening-closing control unit 14, in which intercommunication therebetween is possible. Then, in step S 13, when the driver presses the unlock button 33 of the electronic key 31 twice or long, the automatic door opening command is stored in the electronic key ECU 37.

In step S 14, the driver returns to the vehicle and enters the communicable range around one of the left sliding door 12L, the right sliding door 12R, and the tailgate 13 which is desired by the driver to be opened. In step S 15, when the intercommunication between the electronic key authentication ECU 15 and the electronic key ECU 37 becomes possible, the electronic key ECU 37 having received the request signal transmitted by the electronic key authentication ECU 15 transmits the response signal including the ID code, and the electronic key authentication ECU 15 having received the response signal checks the ID code to perform authentication.

In step S16, when the authentication is established, the door lock control ECU 16 drives the door lock actuator 20 based on a door opening command signal included in the response signal to unlock one of the left sliding door 12L, the right sliding door 12R, and the tailgate 13 which the driver is close to, and the door opening-closing control ECU 17 drives the door opening-closing actuator 21 to automatically open this door. At this time, the buzzer 22 is sounded to notify the driver that the automatic door opening control is performed based on the reservation-set door opening command signal.

The doors 12L, 12R, 13 can be thus automatically opened respectively even when the driver holds goods in both hands and cannot operate the electronic key 31. Hence, there is no need to put the goods on the ground and operate the electronic key 31, and the convenience is improved. Moreover, since there is no need to perform the reservation setting of the automatic door opening control in the door opening-closing control unit 14, the driver can perform the reservation setting of the automatic door opening control without a problem even when the reservation becomes necessary after the driver leaves the driver seat.

Moreover, the antennas 19 are provided respectively in the left sliding door 12L, the right sliding door 12R, and the tailgate 13, and the electronic key authentication ECU 15 recognizes one of the communicable ranges of the doors 12L, 12R, 13 in which the driver exists and automatically opens only the corresponding door without opening the other doors. Accordingly, it is possible to selectively and automatically open only the door desired by the driver to be opened. As a result, it is possible to avoid unnecessary automatic door opening and also prevent, for example, a case where, while the tailgate 13 is automatically opened and the driver is loading goods, a suspicious person enters the vehicle from the left sliding door 12L or the right sliding door 12R which are simultaneously and automatically opened. Moreover, since the driver can determine which one of the doors 12L, 13R, 13 is to be automatically opened after approaching the vehicle, the driver does not have to consider a state of the vehicle and determine which one of the doors 12L, 12R, 13 is to be automatically opened at the time of the reservation.

Next, description is given of automatic door closing control of the left sliding door 12L, the right sliding door 12R, and the tailgate 13 by reservation.

The following case sometimes occurs. The driver gets out of the driver seat and opens one of the left sliding door 12L, the right sliding door 12R, and the tailgate 13 in order to carry goods loaded on the vehicle to another place by holding the goods with hands. However, the amount of the goods loaded on the vehicle is unexpectedly large, and the driver cannot close the one of the left sliding door 12L, the right sliding door 12R, and the tailgate 13 by operating the electronic key 31 while holding the goods with hands. In the embodiment, by storing an automatic door closing command in the electronic key 31 in advance before the driver holds the goods in both hands, the one of the doors 12L, 12R, 13 which is open is automatically closed when the driver leaves the vehicle while holding the goods. Accordingly, there is no need to put the goods on the ground and operate the electronic key 31, and the convenience is improved.

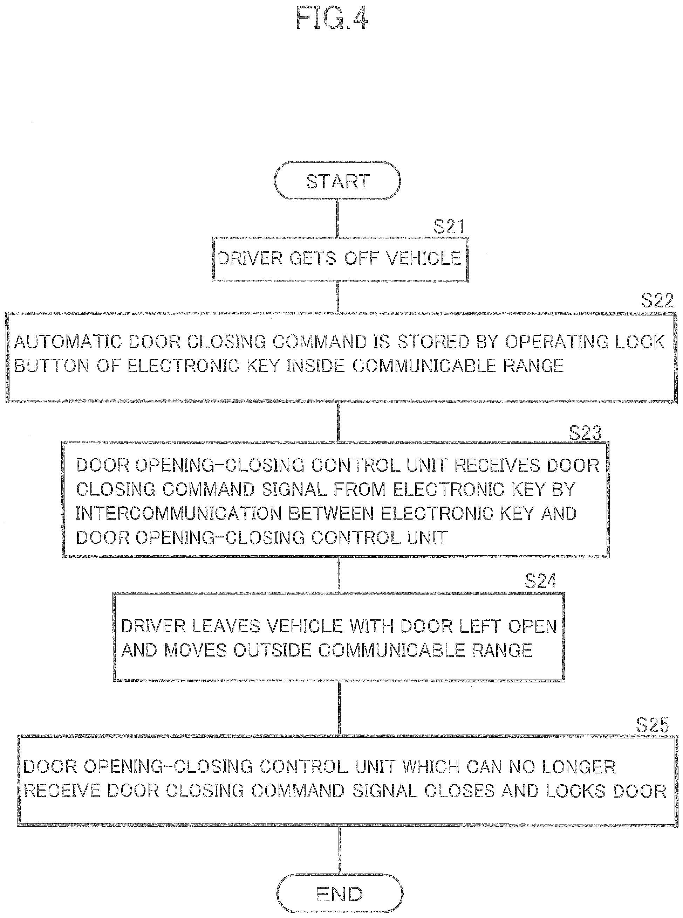

Specifically, in step S21 of a flowchart of FIG. 4, the driver gets off the vehicle and opens one of the left sliding door 12L, the right sliding door 12R, and the tailgate 13 in order to unload goods in a vehicle compartment. When the driver determines at this time that the amount of goods to be unloaded is large, in step S22, the driver presses the lock button 32 of the electronic key 31 twice or long inside the communicable range near the one of the doors 12L, 12R, 13, and the automatic door closing command is thereby stored in the electronic key ECU 37. When the driver knows in advance that the amount of goods is large, the driver may store the automatic door closing command in the electronic key ECU 37 before opening the one of the doors 12L, 12R, 13.

In this case, since the driver is inside the communicable range near one of the doors 12L, 12R, 13, the reception levels of the request signal and the response signal are equal to or greater than the thresholds, and the intercommunication between the electronic key ECU 37 of the electronic key 31 and the electronic key authentication ECU 15 of the door opening-closing control unit 14 is performed. Accordingly, in step S23, the door opening-closing control unit 14 receives a door closing command signal from the electronic key ECU 37, and the door opening-closing control ECU 17 causes the buzzer 22 to sound so as to notify the driver that reservation setting of the automatic door closing control is performed.

In subsequent step S24, the driver holds the goods in the vehicle compartment in both hands and leaves the vehicle through one of the doors 12L, 12R, 13 which the driver has opened and then moves outside the communicable range. The reception levels of the request signal and the response signal thereby fall below the thresholds and, in step S25, the intercommunication between the electronic key ECU 37 of the electronic key 31 and the electronic key authentication ECU 15 of the door opening-closing control unit 14 stops. Then, the door opening-closing control ECU 17 drives the door opening-closing actuator 21 to automatically close the one of the left sliding door 12L, the right sliding door 12R, and the tailgate 13 which the driver has opened, according to a command from the electronic key authentication ECU 15 of the door opening-closing control unit 14. Moreover, the door lock control ECU 16 drives the door lock actuator 20 to lock all of the left front door 11L, the right front door 11R, the left sliding door 12L, the right sliding door 12R, and the tailgate 13.

The doors 12L, 12R, 13 can be thus automatically closed respectively even when the driver holds goods in both hands and cannot operate the lock button 32 of the electronic key 31. Hence, there is no need to put the goods on the ground and operate the electronic key 31, and the convenience is improved. Moreover, since there is no need to perform the reservation setting of the automatic door closing control in the door opening-closing control unit 14, the driver can perform the reservation setting of the automatic door closing control without a problem even when the reservation becomes necessary after the driver leaves the driver seat.

Moreover, since the automatic door closing command and the automatic door opening command can be stored in the electronic key 31 by utilizing the existing lock button 32 and unlock button 33, increase in cost can be suppressed to the minimum.

### [Second Embodiment]

Next, description is given of automatic door opening control of a left sliding door 12L, a right sliding door 12R, and a tailgate 13 in a second embodiment. In the embodiment, a door opening-closing control apparatus only needs to be configured as in the aforementioned first example. In the case where a driver leaves a vehicle for shopping and returns to the vehicle with both hands occupied by a large amount of goods, the driver cannot operate an electronic key 31 to open the left sliding door 12L, the right sliding door 12R, or the tailgate 13 in order to load the goods onto the vehicle, unless the driver puts the goods on the ground. In the embodiment, by storing an automatic door opening command in a door opening-closing control unit 14 in advance before the driver leaves the vehicle, one of the doors 12L, 12R, 13 is automatically opened when the driver returns to the vehicle. Accordingly, there is no need to put goods on the ground and operate the electronic key 31, and the convenience is improved.

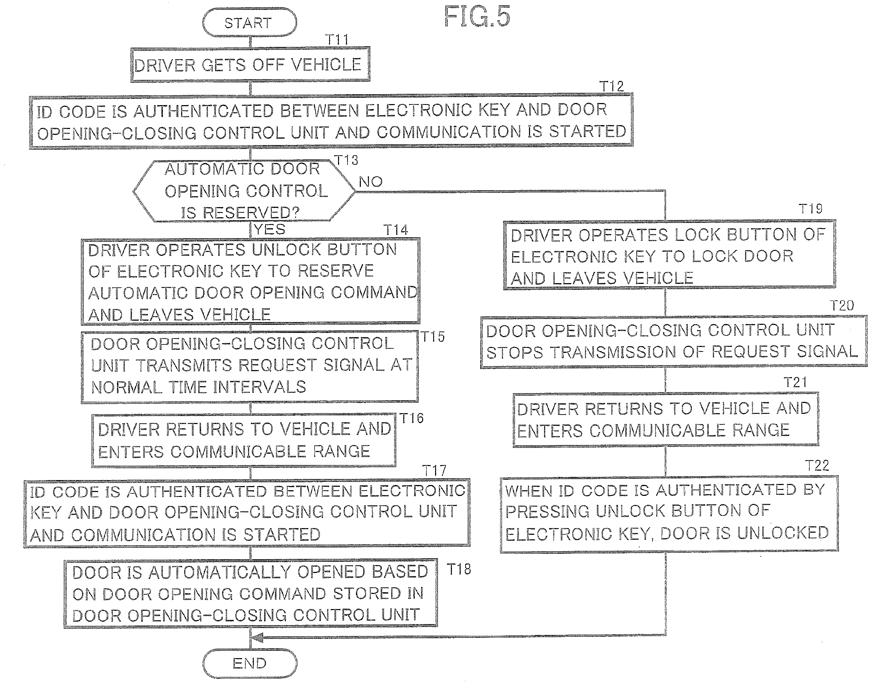

Specifically, in step T11 of a flowchart of FIG. 5, the driver gets off the vehicle. When the driver is inside a communicable region around one of the left sliding door 12L, the right sliding door 12R, and the tailgate 13, in step T12, authentication is established between an electronic key authentication ECU 15 of the door opening-closing control unit 14 and an electronic key ECU 37 of the electronic key 31, and intercommunication is performed therebetween. From this state, in the case of reserving the automatic door opening control in step T13, in step T14, the driver presses an unlock button 33 of the electronic key 31 twice or long to store the automatic door opening command in the electronic key authentication ECU 15 of the door opening-closing control unit 14, and then leaves the vehicle. In the case where the automatic door opening control of the doors 12L, 12R, 13 is reserved as described above, in step T15, the electronic key authentication ECU 15 of the door opening-closing control unit 14 continues transmitting a request signal at normal time intervals.

In the case where the automatic door opening control of the doors 12L, 12R, 13 is reserved, the following operations are performed. In step T16, the driver returns to the vehicle while holding goods in both hands and enters the communicable range around one of the left sliding door 12L, the right sliding door 12R, and the tailgate 13 which is desired by the driver to be opened. In step T17, the intercommunication between the door opening-closing control unit 14 and the electronic key 31 becomes possible, the electronic key ECU 37 having received the request signal transmitted by the electronic key authentication ECU 15 transmits a response signal including an ID code, and the electronic key authentication ECU 15 having received the response signal checks the ID code to perform authentication.

When the authentication is established, in step T18, a door lock control ECU 16 drives a door lock actuator 20 based on the door opening command stored in advance in the electronic key authentication ECU 15 to unlock one of the left sliding door 12L, the right sliding door 12R, and the tailgate 13 which the driver is close to, and a door opening-closing control ECU 17 drives a door opening-closing actuator 21 to automatically open this door. At this time, the door opening-closing control ECU 17 causes a buzzer 22 to sound to notify the driver that the automatic door opening control is performed based on the reservation-set door opening command.

The doors 12L, 12R, 13 can be thus automatically opened respectively even when the driver holds goods in both hands and cannot operate the electronic key 31. Hence, there is no need to put the goods on the ground and operate the electronic key 31, and the convenience is improved.

Moreover, antennas 19 are provided respectively in the left sliding door 12L, the right sliding door 12R, and the tailgate 13, and the electronic key authentication ECU 15 recognizes one of the communicable ranges of the doors 12L, 12R, 13 in which the driver exists and automatically opens only the corresponding door without opening the other doors. Accordingly, it is possible to selectively and automatically open only the door desired by the driver to be opened. As a result, it is possible to avoid unnecessary automatic door opening and also prevent, for example, a case where, while the tailgate 13 is automatically opened and the driver is loading goods, a suspicious person enters the vehicle from the left sliding door 12L or the right sliding door 12R which are simultaneously and automatically opened.

Meanwhile, in the case where the automatic door opening control is not reserved in step T13 described above, the following operations are performed. In step T19, the driver presses the lock button 32 of the electronic key 31 and leaves the vehicle with all of a left front door 11L, a right front door 11R, the left sliding door 12L, the right sliding door 12R, and the tailgate 13 being locked. Then, in step T20, when the driver moves outside the communicable range and the intercommunication between the door opening-closing control unit 14 and the electronic key 31 stops, the door opening-closing control unit 14 stops transmission of the request signal. This can reduce dark current consumed by the door opening-closing control unit 14 and prevent a battery of the vehicle from being wastefully consumed.

In step T21, even when the driver returns to the vehicle and enters the communicable range near the door 12L, 12R or 13, the intercommunication does not automatically start because the door opening-closing control unit 14 has stopped transmission of the request signal. However, in step T22, when the driver presses the unlock button 33 of the electronic key 31, a door unlock command signal including the ID code is transmitted. Then, when the electronic key authentication ECU 15 of the door opening-closing control unit 14 having received the door unlock command signal completes the authentication, the door lock control ECU 16 drives the door lock actuator 20 to unlock all of the left front door 11L, the right front door 11R, the left sliding door 12L, the right sliding door 12R, and the tailgate 13. Accordingly, the driver can get on the vehicle without a problem.

Next, description is given of automatic door closing control of the left sliding door 12L, the right sliding door 12R, and the tailgate 13 by reservation.

The following case sometimes occurs. The driver gets off the vehicle and opens one of the left sliding door 12L, the right sliding door 12R, and the tailgate 13 in order to carry goods loaded on the vehicle to another place and then holds the goods with hands. However, holding the goods in both hands makes the operation on the electronic key 31 difficult, and the one of the doors 12L, 12R, 13 which is opened may not be closed. In the embodiment, by storing the automatic door closing command in the door opening-closing control unit 14 in advance before the driver holds the goods in both hands, the one of the doors 12L, 12R, 13 which is opened is automatically closed when the driver leaves the vehicle while holding the goods. Accordingly, there is no need to put the goods on the ground and operate the electronic key 31, and the convenience is improved.

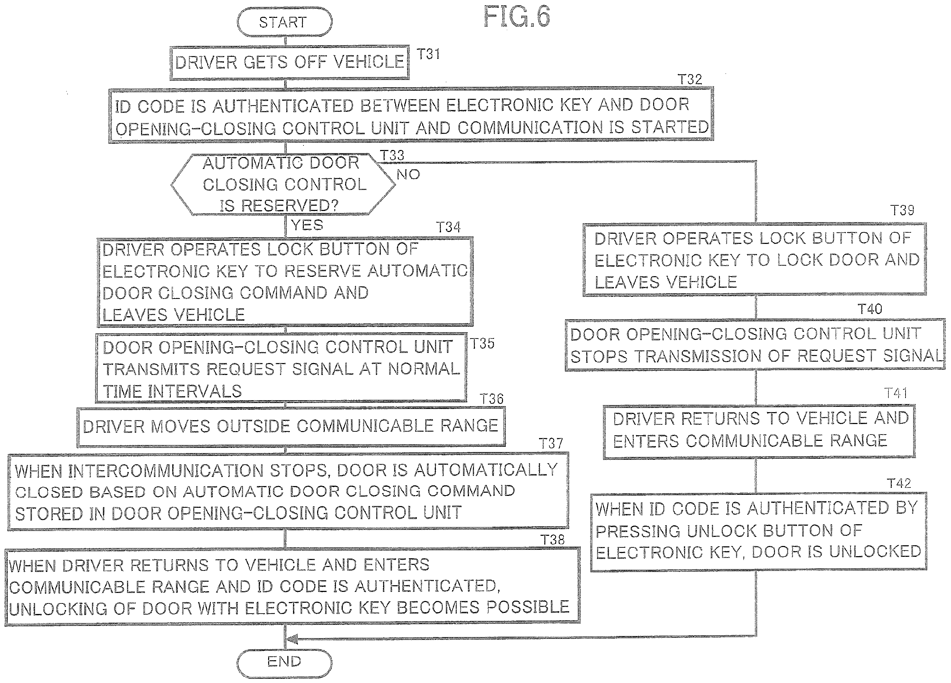

Specifically, in step T31 of a flowchart of FIG. 6, the driver gets off the vehicle. When the driver is inside the communicable range around one of the left sliding door 12L, the right sliding door 12R, and the tailgate 13, in step T32, the authentication between the electronic key authentication ECU 15 of the door opening-closing control unit 14 and the electronic key ECU 37 of the electronic key 31 is established. From this state, in the case of reserving the automatic door closing control in step T33, in step T34, the driver presses the lock button 32 of the electronic key 31 twice or long to store the automatic door closing command in the electronic key authentication ECU 15 of the door opening-closing control unit 14, and then leaves the vehicle. In the case where the automatic door closing control of the door 12L, 12R, 13 is reserved, in step T35, the electronic key authentication ECU 15 of the door opening-closing control unit 14 continues transmitting the request signal at normal time intervals. In this case, the door opening-closing control ECU 17 causes the buzzer 22 to sound to notify the driver that reservation setting of the automatic door closing control is performed.

In subsequent step T36, the driver moves outside the communicable range. The reception levels of the request signal and the response signal thereby fall below the thresholds and, in step T37, the intercommunication between the electronic key ECU 37 of the electronic key 31 and the electronic key authentication ECU 15 of the door opening-closing control unit 14 stops. Then, the door opening-closing control ECU 17 drives the door opening-closing actuator 21, based on the automatic door closing command stored in the electronic key authentication ECU 15 of the door opening-closing control unit 14, so as to automatically close the left sliding door 12L, the right sliding door 12R, or the tailgate 13 which is opened. Moreover, the door lock control ECU 16 drives the door lock actuator 20 to lock all of the left front door 11L, the right front door 11R, the left sliding door 12L, the right sliding door 12R, and the tailgate 13.

The doors 12L, 12R, 13 can be thus automatically closed respectively even when the driver holds goods in both hands and cannot operate the electronic key 31. Accordingly, there is no need to put goods on the ground and operate the electronic key 31, and the convenience is improved.

In step T38, when the driver returns to the vehicle and enters the communicable range of one of the doors 12L, 12R, 13 and the authentication between the door opening-closing control unit 14 and the electronic key 31 is completed, the driver can unlock all of the doors 11L, 11R, 12L, 12R, 13 by pressing the unlock button 33 of the electronic key 31.

Meanwhile, in the case where the automatic door closing control is not reserved in step T33 described above, the following operations are performed. In step 39, the driver presses the lock button 32 of the electronic key 31 and leaves the vehicle with all of the left front door 11L, the right front door 11R, the left sliding door 12L, the right sliding door 12R, and the tailgate 13 being locked. Then, in step T40, when the driver moves outside the communicable range and the intercommunication between the door opening-closing control unit 14 and the electronic key 31 stops, the door opening-closing control unit 14 stops transmission of the request signal. This can reduce dark current consumed by the door opening-closing control unit 14 and prevent the battery of the vehicle from being wastefully consumed.

In step T41, even when the driver returns to the vehicle and enters the communicable range near the door 12L, 12R or 13, the intercommunication does not automatically start because the door opening-closing control unit 14 has stopped transmission of the request signal. However, in step T42, when the driver presses the unlock button 33 of the electronic key 31, the door unlock command signal including the ID code is transmitted. Then, when the electronic key authentication ECU 15 of the door opening-closing control unit 14 having received the door unlock command signal completes the authentication, the door lock control ECU 16 drives the door lock actuator 20 to unlock all of the left front door 11L, the right front door 11R, the left sliding door 12L, the right sliding door 12R, and the tailgate 13. Accordingly, the driver can get on the vehicle without a problem.

In the embodiment, since the automatic door closing command and the automatic door opening command can be stored in the electronic key 31 by utilizing the existing lock button 32 and unlock button 33, increase in cost can be suppressed to the minimum.

### [Third Embodiment]

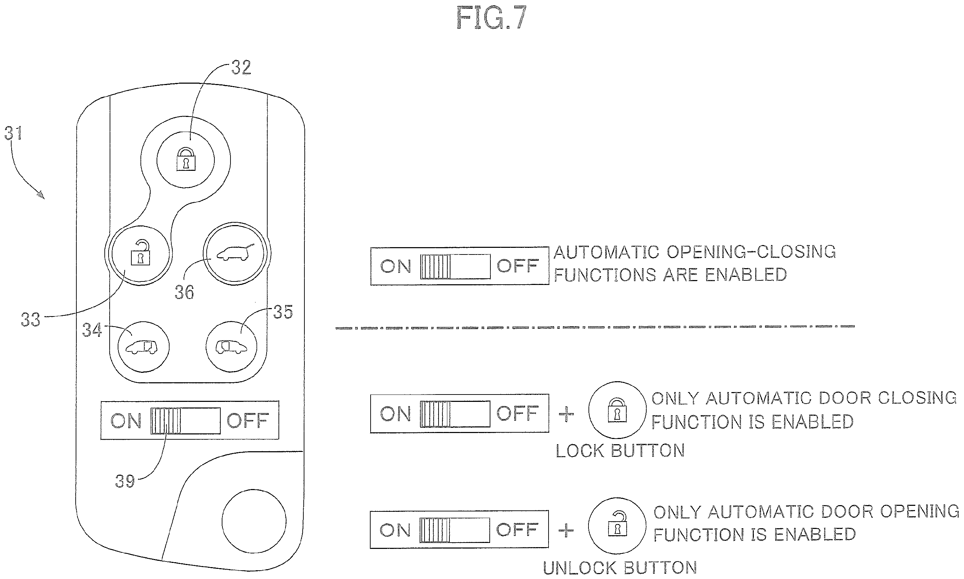

As illustrated in FIG. 7, an electronic key 31 in a third embodiment further includes a slide switch 39. The slide switch 39 can be switched between an ON position and an OFF position. When the slide switch 39 is operated to be set at the ON position, automatic opening-closing functions of doors by reservation are enabled. When the slide switch 39 is operated to be set at the OFF position, the automatic opening-closing functions of the doors by reservation are disabled. In the embodiment, whether the automatic opening-closing functions of the doors 12L, 12R, 13 by reservation are enabled or disabled can be checked in a glance by visually observing the position of the slide switch 39.

Moreover, as a modified example of the aforementioned embodiment, the automatic door closing function by reservation may be enabled by pressing a lock button 32 with the slide switch 39 operated to be set at the ON position, and the automatic door opening function by reservation may be enabled by pressing an unlock button 33 with the slide switch 39 operated to be set at the ON position. In this modified example, since only one of the automatic door closing function by reservation and the automatic door opening function by reservation can be enabled, the convenience is further improved.

### [Fourth Embodiment]

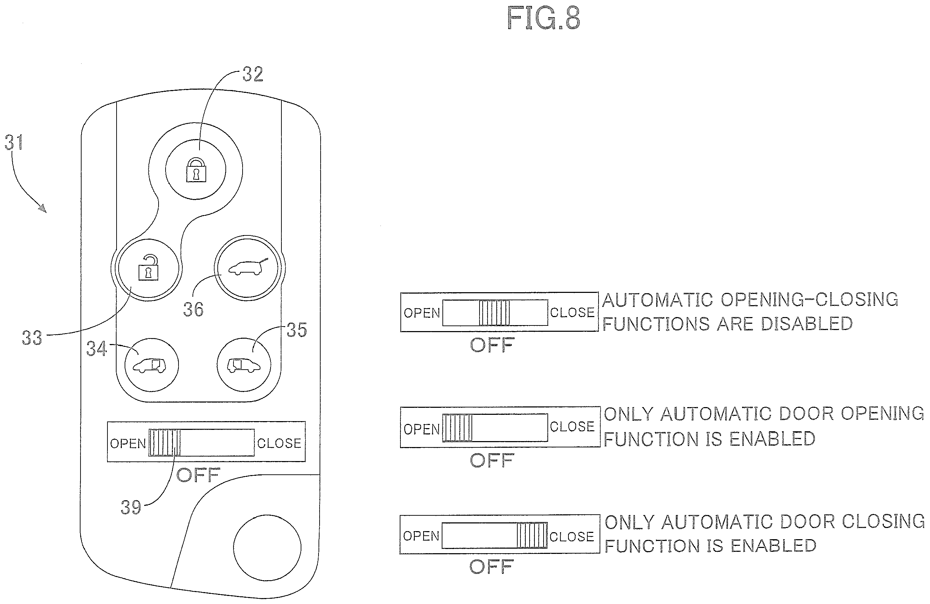

As illustrated in FIG. 8, an electronic key 31 in a fourth embodiment includes a slide switch 39 different from the slide switch 39 in the third embodiment. This slide switch 39 can be switched among an OFF position, an open position, and a close position. When the slide switch 39 is operated to be set at the OFF position, automatic opening-closing functions of doors by reservation are disabled. When the slide switch 39 is operated to be set at the open position, the automatic door opening function by reservation is enabled. When the slide switch 39 is operated to be set at the close position, the automatic door closing function by reservation is enabled. In this embodiment, whether the automatic door opening function or the automatic door closing function of the doors 12L, 12R, 13 by reservation is enabled or disabled can be checked in a glance by visually observing the position of the slide switch 39.

The embodiments of the present invention are described above. However, various design changes can be made within the scope not departing from the gist of the present invention.

For example, the door in the present invention is not limited to the left sliding door 12L, the right sliding door 12R, and the tailgate 13 in the embodiments and may be a trunk lid.

Moreover, the automatic opening-closing functions of the doors in the embodiments include the locking and unlocking of the doors by the door lock actuator 20 and the opening and closing of the doors by the door opening-closing actuator 21. However, it is possible to eliminate the opening and closing of the doors by the door opening-closing actuator 21 and include only the locking and unlocking of the doors by the door lock actuator 20.

Moreover, the reason why the intercommunication between the electronic key 31 and the door opening-closing control unit 14 stops is not limited to that the reception level of the signal transmitted from the electronic key 31 falls below the threshold, and may be that the door opening-closing control unit 14 does not receive any response signal from the electronic key 31 in response to the request signal transmitted from the door opening-closing control unit 14 multiple times.

Furthermore, the automatic door opening control or the automatic door closing control in the present invention is effective not only in the case where both hands of the driver are occupied, but also in the case where the driver wears thick gloves and therefore it is difficult to operate the electronic key 31.

## Claims

1. A door opening-closing control apparatus of a vehicle in which when authentication is established by intercommunication using a request signal and a response signal, door opening operation and door closing operation of a door (12L, 12R, 13) of the vehicle by a portable device (31) carried by a driver are allowed, the request signal being transmitted at a predetermined time interval by a door opening-closing control unit (14) provided in the vehicle, and the response signal being transmitted by the portable device (31) in response to the request signal, wherein
the door opening-closing control unit (14) includes reservation setting means (37) which stores an automatic door opening command for automatically opening the door (12L, 13L, 13),
in a state where the automatic door opening command is stored in the reservation setting means (37), the door opening-closing control unit (14) automatically opens the door (12L, 12R, 13) when the portable device (31) is moved close to the door (12L, 12R, 13) and the authentication is established between the door opening-closing control unit (14) and the portable device (31), and
**characterized in that**
in a state where the automatic door opening command is not stored in the reservation setting means (37), the door opening-closing control unit (14) does not transmit the request signal or sets a transmission time interval of the request signal longer than the predetermined time interval.

2. A door opening-closing control apparatus of a vehicle in which when authentication is established by intercommunication using a request signal and a response signal, door opening operation and door closing operation of a door (12L, 12R, 13) of the vehicle by a portable device (31) carried by a driver are allowed, the request signal being transmitted at a predetermined time interval by a door opening-closing control unit (14) provided in the vehicle, and the response signal being transmitted by the portable device (31) in response to the request signal, wherein
the door opening-closing control unit (14) includes reservation setting means (37) which stores an automatic door closing command for automatically closing the door (12L, 12R, 13),
in a state where the automatic door closing command is stored in the reservation setting means (37), the door opening-closing control unit (14) automatically closes the door (12L, 12R, 13) when the portable device (31) is moved away from the door (12L, 12R, 13) and the intercommunication between the door opening-closing control unit (14) and the portable device (31) stops, and
**characterized in that**
in a state where the automatic door closing command is not stored in the reservation setting means (37), the door opening-closing control unit (14) does not transmit the request signal or sets a transmission time interval of the request signal longer than the predetermined time interval.

3. The door opening-closing control apparatus of a vehicle according to any one of claims 1 to 2, wherein
the portable device (31) includes a door opening button (33) used to transmit a door opening command for opening the door (12L, 12R, 13) and a door closing button used to transmit a door closing command for closing the door,
the automatic door opening command is stored by performing predetermined operation on the door opening button (33), and
the automatic door closing command is stored by performing predetermined operation on the door closing button (32).

4. The door opening-closing control apparatus of a vehicle according to any one of claims 1 to 2, wherein
the portable device (31) includes a slide switch (39), and
the automatic door opening command or the automatic door closing command is stored by operating the slide switch (39).

5. The door opening-closing control apparatus of a vehicle according to claim 4, wherein
the portable device (31) includes a door opening button (33) used to transmit a door opening command for opening the door (12L, 12R, 13) and a door closing button (32) used to transmit a door closing command for closing the door (12L, 12R, 13),
the automatic door opening command is stored by operating the door opening button (33) with the slide switch (39) set at an ON position, and
the automatic door closing command is stored by operating the door closing button (32) with the slide switch (39) set at the ON position.

6. The door opening-closing control apparatus of a vehicle according to claim 4, wherein the slide switch (39) is switchable among an OFF position, an automatic door opening position, and an automatic door closing position.

7. The door opening-closing control apparatus of a vehicle according to any one of claims 1 to 6, wherein the door is any of a sliding door (12L, 12R, 13), a tailgate (13), and a trunk lid.

## Patentansprüche

1. Tür-Öffnungs-Schließ-Steuervorrichtung eines Fahrzeugs, in welcher, wenn eine Authentifizierung durch eine Kommunikation unter Verwendung eines Anfragesignals und eines Antwortsignals hergestellt ist, eine Tür-Öffnungsbetätigung und eine Tür-Schließbetätigung einer Tür (12L, 12R, 13) des Fahrzeugs durch eine von einem Fahrer getragene tragbare Vorrichtung (31) erlaubt ist, wobei das Anfragesignal bei einem vorbestimmten Zeitintervall durch eine Tür-Öffnungs-Schließ-Steuereinheit (14) übertragen wird, welche in dem Fahrzeug bereitgestellt ist, und das Antwortsignal von der tragbaren Vorrichtung (31) als Antwort auf das Anfragesignal übertragen wird, wobei
die Tür-Öffnungs-Schließ-Steuereinheit (14) ein Reservierungs-Festlegungsmittel (37) umfasst, welches eine automatische Tür-Öffnungsanweisung zum automatischen Öffnen der Tür (12L, 13L, 13) speichert,
in einem Zustand, in welchem die automatische Tür-Öffnungsanweisung in dem Reservierungs-Festlegungsmittel (37) gespeichert ist, die Tür-Öffnungs-Schließ-Steuereinheit (14) automatisch die Tür (12L, 12R, 13) öffnet, wenn die tragbare Vorrichtung (31) nahe zu der Tür (12L, 12R, 13) bewegt wird und die Authentifizierung zwischen der Tür-Öffnungs-Schließ-Steuereinheit (14) und der tragbaren Vorrichtung (31) hergestellt ist, und
**dadurch gekennzeichnet, dass**
in einem Zustand, in welchem die automatische Tür-Öffnungsanweisung nicht in dem Reservierungs-Festlegungsmittel (37) gespeichert ist, die Tür-Öffnungs-Schließ-Steuereinheit (14) das Anfragesignal nicht überträgt oder ein Übertragungs-Zeitintervall des Anfragesignals festlegt, welches länger als das vorbestimmte Zeitintervall ist.

2. Tür-Öffnungs-Schließ-Steuervorrichtung eines Fahrzeugs, in welcher, wenn eine Authentifizierung durch eine Kommunikation unter Verwendung eines Anfragesignals und eines Antwortsignals hergestellt ist, eine Tür-Öffnungsbetätigung und eine Tür-Schließbetätigung einer Tür (12L, 12R, 13) des Fahrzeugs durch eine von einem Fahrer getragene tragbare Vorrichtung (31) erlaubt ist, wobei das Anfragesignal bei einem vorbestimmten Zeitintervall durch eine Tür-Öffnungs-Schließ-Steuereinheit (14) übertragen wird, welche in dem Fahrzeug bereitgestellt ist, und das Antwortsignal von der tragbaren Vorrichtung (31) als Antwort auf das Anfragesignal übertragen wird, wobei
die Tür-Öffnungs-Schließ-Steuereinheit (14) ein Reservierungs-Festlegungsmittel (37) umfasst, welches eine automatische Tür-Schließanweisung zum automatischen Schließen der Tür (12L, 12R, 13) speichert,
in einem Zustand, in welchem die automatische Tür-Schließanweisung in dem Reservierungs-Festlegungsmittel (37) gespeichert ist, die Tür-Öffnungs-Schließ-Steuereinheit (14) automatisch die Tür (12L, 12R, 13) schließt, wenn die tragbare Vorrichtung (31) von der Tür (12L, 12R, 13) weg bewegt wird und die Kommunikation zwischen der Tür-Öffnungs-Schließ-Steuereinheit (14) und der tragbaren Vorrichtung (31) endet, und **dadurch gekennzeichnet, dass**
in einem Zustand, in welchem die automatische Tür-Schließanweisung nicht in dem Reservierungs-Festlegungsmittel (37) gespeichert ist, die Tür-Öffnungs-Schließ-Steuereinheit (14) das Anfragesignal nicht überträgt oder ein Übertragungs-Zeitintervall des Anfragesignals festlegt, welches länger als das vorbestimmte Zeitintervall ist.

3. Tür-Öffnungs-Schließ-Steuervorrichtung eines Fahrzeugs nach einem der Ansprüche 1 bis 2, wobei
die tragbare Vorrichtung (31) einen Tür-Öffnungsknopf (33), welcher verwendet wird, um eine Tür-Öffnungsanweisung zum Öffnen der Tür (12L, 12R, 13) zu übertragen, sowie einen Tür-Schließknopf, welcher verwendet wird, um eine Tür-Schließanweisung zum Schließen der Tür zu übertragen, umfasst,
die automatische Tür-Öffnungsanweisung gespeichert wird, indem eine vorbestimmte Betätigung an dem Tür-Öffnungsknopf (33) durchgeführt wird, und
die automatische Tür-Schließanweisung gespeichert wird, indem eine vorbestimmte Betätigung an dem Tür-Schließknopf (32) durchgeführt wird.

4. Tür-Öffnungs-Schließ-Steuervorrichtung eines Fahrzeugs nach einem der Ansprüche 1 bis 2, wobei
die tragbare Vorrichtung (31) einen Schiebeschalter (39) umfasst, und die automatische Tür-Öffnungsanweisung oder die automatische Tür-Schließanweisung gespeichert wird, indem der Schiebeschalter (39) betätigt wird.

5. Tür-Öffnungs-Schließ-Steuervorrichtung eines Fahrzeugs nach Anspruch 4, wobei
die tragbare Vorrichtung (31) einen Tür-Öffnungsknopf (33), welcher verwendet wird, um eine Tür-Öffnungsanweisung zum Öffnen der Tür (12L, 12R, 13) zu übertragen, sowie einen Tür-Schließknopf (32), welcher verwendet wird, um eine Tür-Schließanweisung zum Schließen der Tür (12L, 12R, 13) zu übertragen, umfasst,
die automatische Tür-Öffnungsanweisung gespeichert wird, indem der Tür-Öffnungsknopf (33) mit dem Schiebeschalter (39) auf eine EIN-Position gesetzt betätigt wird, und
die automatische Tür-Schließanweisung gespeichert wird, indem der Tür-Schließknopf (32) mit dem Schiebeschalter (39) auf die EIN-Position gesetzt betätigt wird.

6. Tür-Öffnungs-Schließ-Steuervorrichtung eines Fahrzeugs nach Anspruch 4, wobei der Schiebeschalter (39) zwischen einer AUS-Position, einer automatischen Tür-Öffnungsposition und einer automatischen TürSchließposition schaltbar ist.

7. Tür-Öffnungs-Schließ-Steuervorrichtung eines Fahrzeugs nach einem der Ansprüche 1 bis 6, wobei die Tür eines ist aus einer Schiebetür (12L, 12R, 13), einer Hackklappe (13) und einem Kofferraumdeckel.

## Revendications

1. Appareil de commande d'ouverture-fermeture de porte d'un véhicule dans lequel lorsqu'une authentification est établie par intercommunication au moyen d'un signal de demande et d'un signal de réponse, l'opération d'ouverture de porte et l'opération de fermeture de porte d'une porte (12L, 12R, 13) du véhicule par un dispositif portable (31) réalisée par un conducteur sont autorisées, le signal de demande étant transmis à un intervalle de temps prédéterminé par une unité de commande d'ouverture-fermeture de porte (14) prévue dans le véhicule, et le signal de réponse étant transmis par le dispositif portable (31) en réponse au signal de demande, dans lequel
l'unité de commande d'ouverture-fermeture de porte (14) comporte un moyen de définition de réservation (37) qui stocke une commande d'ouverture de porte automatique pour ouvrir automatiquement la porte (12L, 13L, 13),
dans un état où la commande d'ouverture de porte automatique est stockée dans le moyen de définition de réservation (37), l'unité de commande d'ouverture-fermeture de porte (14) ouvre automatiquement la porte (12L, 12R, 13) lorsque le dispositif portable (31) est approché de la porte (12L, 12R, 13) et que l'authentification est établie entre l'unité de commande d'ouverture-fermeture de porte (14) et le dispositif portable (31), et
**caractérisé en ce que**
dans un état où la commande d'ouverture de porte automatique n'est pas stockée dans le moyen de définition de réservation (37), l'unité de commande d'ouverture-fermeture de porte (14) ne transmet pas le signal de demande ou définit un intervalle de temps de transmission du signal de demande plus long que l'intervalle de temps prédéterminé.

2. Appareil de commande d'ouverture-fermeture de porte d'un véhicule dans lequel lorsque l'authentification est établie par intercommunication au moyen d'un signal de demande et d'un signal de réponse, l'opération d'ouverture de porte et l'opération de fermeture de porte d'une porte (12L, 12R, 13) du véhicule par un dispositif portable (31) porté par un conducteur sont autorisées, le signal de demande étant transmis à un intervalle de temps prédéterminé par une unité de commande d'ouverture-fermeture de porte (14) prévue dans le véhicule, et le signal de réponse étant transmis par le dispositif portable (31) en réponse au signal de demande, dans lequel
l'unité de commande d'ouverture-fermeture de porte (14) comporte un moyen de définition de réservation (37) qui stocke une commande de fermeture de porte automatique pour fermer automatiquement la porte (12L, 12R, 13),
dans un état où la commande de fermeture de porte automatique est stockée dans le moyen de définition de réservation (37), l'unité de commande d'ouverture-fermeture de porte (14) ferme automatiquement la porte (12L, 12R, 13) lorsque le dispositif portable (31) est écarté de la porte (12L, 12R, 13) et que l'intercommunication entre l'unité de commande d'ouverture-fermeture de porte (14) et le dispositif portable (31) s'arrête, et
**caractérisé en ce que**
dans un état où la commande de fermeture de porte automatique n'est pas stockée dans le moyen de définition de réservation (37), l'unité de commande d'ouverture-fermeture de porte (14) ne transmet pas le signal de demande ou définit un intervalle de temps de transmission du signal de demande plus long que l'intervalle de temps prédéterminé.

3. Appareil de commande d'ouverture-fermeture de porte d'un véhicule selon l'une quelconque des revendications 1 et 2, dans lequel
le dispositif portable (31) comporte un bouton d'ouverture de porte (33) utilisé pour transmettre une commande d'ouverture de porte pour ouvrir la porte (12L, 12R, 13) et un bouton de fermeture de porte utilisé pour transmettre une commande de fermeture de porte pour fermer la porte,
la commande d'ouverture de porte automatique est stockée en réalisant une opération prédéterminée sur le bouton d'ouverture de porte (33), et
la commande de fermeture de porte automatique est stockée en réalisant une opération prédéterminée sur le bouton de fermeture de porte (32).

4. Appareil de commande d'ouverture-fermeture de porte d'un véhicule selon l'une quelconque des revendications 1 et 2, dans lequel
le dispositif portable (31) comporte un commutateur à coulisse (39), et
la commande d'ouverture de porte automatique ou la commande de fermeture de porte automatique est stockée en actionnant le commutateur à coulisse (39).

5. Appareil de commande d'ouverture-fermeture de porte d'un véhicule selon la revendication 4, dans lequel
le dispositif portable (31) comporte un bouton d'ouverture de porte (33) utilisé pour transmettre une commande d'ouverture de porte pour ouvrir la porte (12L, 12R, 13) et un bouton de fermeture de porte (32) utilisé pour transmettre une commande de fermeture de porte pour fermer la porte (12L, 12R, 13),
la commande d'ouverture de porte automatique est stockée en actionnant le bouton d'ouverture de porte (33) avec le commutateur à coulisse (39) placé en position ON (marche), et
la commande de fermeture de porte automatique est stockée en actionnant le bouton de fermeture de porte (32) avec le commutateur à coulisse (39) placé en position ON.

6. Appareil de commande d'ouverture-fermeture de porte d'un véhicule selon la revendication 4, dans lequel le commutateur à coulisse (39) peut être commuté entre une position OFF (arrêt), une position d'ouverture de porte automatique et une position de fermeture de porte automatique.

7. Appareil de commande d'ouverture-fermeture de porte d'un véhicule selon l'une quelconque des revendications 1 à 6, dans lequel la porte et l'une quelconque d'une porte coulissante (12L, 12R, 13), d'un hayon (13) et d'une porte de coffre.
